# EUROPÄISCHE PATENTSCHRIFT

(11) **EP 2 440 418 B1**
(45) Veröffentlichungstag und Bekanntmachung des Hinweises auf die Patenterteilung: **15.01.2014**
(21) Anmeldenummer: 10773547.4
(22) Anmeldetag: 16.09.2010
(51) Int. Cl.: B60J 7/00, B60J 7/04

(54) **STEUERSTANGE FÜR EIN VERSTELLBARES SCHLIESSELEMENT EINES FAHRZEUGDACHS**
CONTROL ROD FOR A MOVABLE VEHICLE ROOF PANEL
TIGE DE COMMANDE POUR UN PANNEAU DE TOIT MOBILE DE VÉHICULE

(30) Priorität: 24.09.2009 DE 102009042954
(43) Veröffentlichungstag der Anmeldung: 18.04.2012
(73) Patentinhaber: Webasto SE, 82131 Stockdorf (DE)
(72) Erfinder: WIMMER, Rudolf, 82110 Germering (DE)
(74) Vertreter: Epping - Hermann - Fischer
(86) Internationale Anmeldenummer: PCT/DE2010/001101
(87) Internationale Veröffentlichungsnummer: WO 2011/035763

(56) Entgegenhaltungen:
- EP-A2- 0 244 110
- DE-A1- 2 345 995
- DE-A1-102007 021 005
- DE-U1- 8 435 809
- US-A- 5 054 846

## Beschreibung

Die Erfindung betrifft eine Steuerstange für ein verstellbares Schließelement eines Fahrzeugdachs.

Steuerstangen für den Einsatz bei Schließelementen eines Fahrzeugdachs wie auch für die Steuerung anderer kinematischer Abläufe können aus Stahlblechen gefertigt werden. Die Stahlbleche können zum Ausbilden einer geeigneten Form und zur Befestigung weiterer Elemente wie Gleitkörper und Steuerelemente gestanzt und gebogen werden. Das Stanzen von Stahlblechen erfordert unter Umständen sehr komplexe Stanzwerkzeuge, die sehr hohe Kosten verursachen können. Aufgrund der hohen mechanischen Kräfte beim Stanzen kann die Standzeit der Stanzwerkzeuge sehr gering sein. Damit können die Kosten für das Stanzen der Stahlbleche zur Herstellung der Steuerstangen sehr hoch sein.

Die US 5,054,846 offenbart ein Kraftfahrzeug mit einem festen Dach, das eine Dachöffnung hat, die eine Vorderkante, eine Hinterkante, ein Paar von Seitenkanten und eine Verschlussplatte für die Dachöffnung aufweist. Ein zentrales Scharnier teilt die Verschlussplatte gelenkig in eine vordere Platte und eine hintere Platte.

Die DE 10 2007 021 005 A1 offenbart ein Fahrzeugdach, mit einem eine Dachöffnung wahlweise verschließenden oder wenigstens teilweise freigebenden Deckelelement, das beidseits jeweils ein Trägerelement aufweist, das mit einer Verstelleinrichtung zusammenwirkt, die in einer jeweiligen Führungsschiene geführt ist und ein vorderes Schlittenelement und ein hinteres, gegenüber dem vorderen Schlittenelement verfahrbares Schlittenelement umfasst.

Der Erfindung liegt die Aufgabe zugrunde, eine Steuerstange für ein verstellbares Schließelement eines Fahrzeugdachs zu schaffen, das eine sichere und präzise Funktion ermöglicht und kostengünstig zu fertigen ist.

Diese Aufgabe wird gelöst durch eine Steuerstange für ein verstellbares Schließelement eines Fahrzeugdachs. Das verstellbare Schließelement ist ausgebildet eine Dachöffnung wahlweise in einer Schließstellung zu verschließen oder in weiteren Stellungen mindestens teilweise freizugeben. Die Steuerstange ist aus einem gezogenen Federstahldraht gebildet.

Das verstellbare Schließelement kann insbesondere ein Schiebedachdeckel, ein Hub-Schiebedeckel oder ein Schiebehimmel sein.

Ein Vorteil einer erfindungsgemäßen Steuerstange ist, dass der Federstahldraht bereits als geeignet ausgebildetes Halbzeug zur Verfügung stehen kann. Es ist damit kein Stanzen des Federstahldrahts mehr erforderlich. Der Federstahldraht kann durch Rollen, Pressen, Stauchen und weitere Umformverfahren in einfacher Weise in eine gewünschte Endform gebracht werden. Damit kann eine hohe Standzeit des Werkzeugs zum Bearbeiten des Federstahldrahts erreicht werden. Des Weiteren kann der Materialverlust beim Herstellen der Steuerstange klein gehalten werden. Es ist so nur ein geringer Materialaufwand für die Steuerstange erforderlich. Damit ist eine kostengünstige Herstellung der Steuerstange möglich.

In einer vorteilhaften Ausführungsform ist der gezogene Federstahldraht ein Vierkantdraht. Der Vierkantdraht kann insbesondere präzise gebogen werden. Des Weiteren kann der Vierkantdraht durch Pressen oder Stauchen in einfacher Weise eine vorgegebene Höhe und Breite annehmen.

Weitere vorteilhafte Ausgestaltungen der Erfindung sind in den Unteransprüchen angegeben.

Die Erfindung wird nachfolgend anhand von Ausführungsbeispielen näher erläutert. Es zeigen:
- Figur 1: eine perspektivische Ansicht eines Fahrzeugdachs, und
- Figur 2: eine seitliche Ansicht einer Steuerstange und weiterer Teile für ein verstellbares Schließelements des Fahrzeugdachs.

Elemente gleicher Konstruktion oder Funktion sind figurenübergreifend mit den gleichen Bezugszeichen gekennzeichnet.

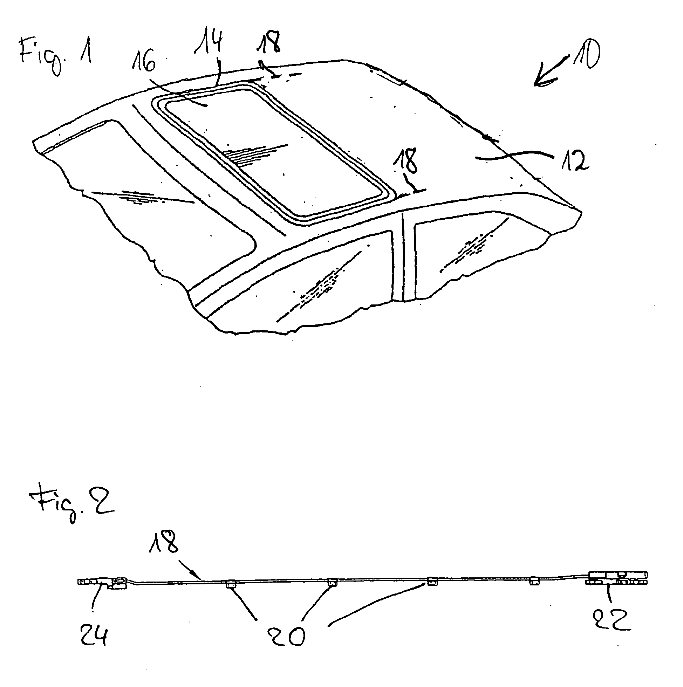

In Figur 1 ist ein Kraftfahrzeug 10 mit einem Fahrzeugdach 12 dargestellt. Das Fahrzeugdach 12 bildet einen Teil der Karosserie des Kraftfahrzeugs 10 und ist mit einer Dachöffnung 14 versehen. Die Dachöffnung 14 kann mittels eines im Bereich der Dachöffnung 14 verschiebbaren Schließelements 16 wahlweise verschlossen oder teilweise freigegeben werden.

In der hier dargestellten Ausführungsform ist das Schließelement 16 ein Schiebedachdeckel, der beispielsweise als innen geführter oder als außen geführter Schiebedachdeckel ausgebildet sein kann. In weiteren Ausführungsformen des Fahrzeugdachs 12 kann anstelle des Schiebedachdeckels auch ein Hub-Schiebedeckel oder ein Schiebehimmel angeordnet sein. Das Fahrzeugdach 12 kann auch weitere Schiebedachdeckel, Hub-Schiebedeckel oder Schiebehimmel aufweisen.

Das verstellbare Schließelement 16 ist mit einer Steuerstange 18 gekoppelt. Die Steuerstange 18 ist mit Gleitkörpern 20 gekoppelt. Des Weiteren ist die Steuerstange 18 bezüglich des Kraftfahrzeugs 10 mit einem hinteren Steuerelement 22 und einem vorderen Steuerelement 24 gekoppelt.

Die Gleitkörper 20 können beispielsweise in einer Führungsschiene, die mit dem Fahrzeugdach 12 gekoppelt ist, gleiten. Die Führungsschienen können insbesondere bezüglich des Kraftfahrzeugs 10 seitlich rechts und links der Dachöffnung 14 angeordnet sein. Durch das Gleiten der Gleitkörper 20 in den Führungsschienen können diese eine Bewegung der Steuerstange 18 in Fahrzeuglängsrichtung ermöglichen.

Das hintere Steuerelement 22 ist vorzugsweise mit einem Steuerantrieb gekoppelt, mittels dem die Steuerstange 18 in Fahrzeuglängsrichtung verschiebbar ist und eine Position der Steuerstange 18 in Fahrzeuglängsrichtung festgelegt werden kann.

Das vordere Steuerelement 24 ermöglicht eine Kopplung der Steuerstange 18 mit dem Schließelement 16. Durch die Führung der Steuerstange 18 in der Führungsschiene des Fahrzeugdachs 12 wird eine Relativbewegung des Schließelements 16 in Fahrzeuglängsrichtung gegenüber dem Fahrzeugdach 12 erreicht. Aufgrund dieser Relativbewegung kann das Schließelement 16 in Fahrzeuglängsrichtung verschoben und/oder angehoben oder abgesenkt werden, wodurch die Dachöffnung 14 verschlossen oder teilweise freigegeben werden kann.

Die Steuerstange 18 ist aus einem gezogenen Federstahldraht gebildet. Für eine Steuerstange 18 aus einem gezogenen Federstahldraht ist keine Bearbeitung durch Stanzen des Federstahldrahts erforderlich. Es ist möglich, den Federstahldraht durch Rollen, Pressen, Stauchen in einfacher Weise in eine gewünschte Form zu bringen. So kann durch ein Biegen des Federstahldrahts dieser einen Verlauf annehmen, wie er für die Steuerstange 18 gewünscht ist.

Durch ein Pressen oder ein lokales Rollen des Federstahldrahts kann die Steuerstange 18 an den gewünschten Stellen eine gewünschte Höhe und Breite erreichen. Dabei kann insbesondere die Höhe oder Breite der Steuerstange 18 lokal reduziert werden. Durch ein Stauchen des Federstahldrahts kann die Steuerstange 18 an ausgewählten Bereichen auch einen vergrößerten Querschnitt gegenüber dem ursprünglichen Federstahldraht erhalten.

In den ausgewählten Bereichen können dann die geeigneten Gleitkörper 20 und das hintere Steuerelement 22 und das vordere Steuerelement 24 an der Steuerstange 18 angebracht werden.

Die Gleitkörper 20 können insbesondere durch einen geeigneten Formschluss, beispielsweise durch Einschrauben oder durch Aufstecken, mit der Steuerstange 18 gekoppelt werden. Alternativ können die Gleitkörper 20 auch durch Umspritzen der Steuerstange 18 ausgebildet und mit dieser verbunden sein.

Wird der Federstahldraht durch Rollen, Pressen oder Stauchen bearbeitet, so kann eine hohe Standzeit des Werkzeugs zum Bearbeiten des Federstahldrahts erreicht werden. Da bei dem Federstahldraht keine spanende Bearbeitung erforderlich ist, und so kein Abfallmaterial entstehen muss, kann durch den Einsatz des Federstahldrahts für die Steuerstange 18 ein sehr geringer Materialaufwand für die Steuerstange 18 erreicht werden. Damit können sowohl geringe Kosten für den Materialeinsatz als auch für die Durchführung des Verfahrens zur Herstellung der Steuerstange 18 erreicht werden.

Durch den Einsatz von Werkzeugen zum Biegen, Rollen oder Pressen kann des Weiteren eine hohe Standzeit des Werkzeugs zum Bearbeiten des Federstahldrahts erreicht werden.

Der gezogene Federstahldraht für die Steuerstange 18 ist insbesondere als Vierkantdraht ausgebildet. Ein Vierkantdraht kann sehr präzise gebogen oder gerollt werden.

Des Weiteren können durch Pressen oder Stauchen des Federstahldrahts in einfacher Weise eine vorgegebene Höhe und/oder Breite des Federstahldrahts und damit der Steuerstange 18 erhalten werden.

Die Erfindung ist nicht auf die angegebenen Ausführungsbeispiele beschränkt. Insbesondere ist es möglich, die Merkmale der verschiedenen Ausführungsbeispiele miteinander zu kombinieren, so dass auch derartige Anordnungen von der Erfindung umfasst sind.

## Patentansprüche

1. Steuerstange (18) für ein verstellbares Schließelement (16) eines Fahrzeugdachs (12), wobei das verstellbare Schließelement (16) ausgebildet ist eine Dachöffnung (14) wahlweise in einer Schließstellung zu verschließen oder in weiteren Stellungen mindestens teilweise freizugeben,
**dadurch gekennzeichnet, dass** die Steuerstange (18) aus einem gezogenen Federstahldraht gebildet ist.

2. Steuerstange (18) nach Anspruch 1,
**dadurch gekennzeichnet, dass** der gezogene Federstahldraht ein Vierkantdraht ist.

## Claims

1. Control rod (18) for an adjustable closing element (16) of a vehicle roof (12), wherein the adjustable closing element (16) is designed to close a roof opening (14) selectively in a closed position or open said roof opening at least partially in further positions, **characterized in that** the control rod (18) is formed from a drawn spring steel wire.

2. Control rod (18) according to Claim 1, **characterized in that** the drawn spring steel wire is a square wire.

## Revendications

1. Tige de commande (18) pour un élément de fermeture réglable (16) d'un toit de véhicule (12), l'élément de fermeture réglable (16) étant réalisé pour fermer une ouverture de toit (14) de manière sélective dans une position de fermeture ou pour la libérer au moins en partie dans d'autres positions,
**caractérisée en ce que** la tige de commande (18) est formée d'un fil en acier à ressort étiré.

2. Tige de commande (18) selon la revendication 1,
**caractérisée en ce que** le fil en acier à ressort étiré est un fil métallique de section quadratique.
